# EUROPÄISCHE PATENTSCHRIFT

(11) **EP 1 528 310 B1**
(45) Veröffentlichungstag und Bekanntmachung des Hinweises auf die Patenterteilung: **09.05.2012**
(21) Anmeldenummer: 04016657.1
(22) Anmeldetag: 15.07.2004
(51) Int. Cl.: F16L 47/03

(54) **Schweissschelle mit Befestigungsmittel-Transporthalterung**
Weldable clamp with transport fixing device for fixing means
Collier de serrage soudable avec fixation de transport pour dispositif de fixation

(30) Priorität: 30.10.2003 DE 20316743 U
(43) Veröffentlichungstag der Anmeldung: 04.05.2005
(73) Patentinhaber: Hawle Armaturen GmbH, 83395 Freilassing (DE)
(72) Erfinder: Stamm, Hans-Ulrich, 35633 Lahnau/Waldgirmes (DE)
(74) Vertreter: Rögner, Jürgen

(56) Entgegenhaltungen:
- EP-A- 0 088 703
- EP-A- 0 733 846
- FR-A- 2 571 121
- US-A- 5 252 810

## Beschreibung

Die Erfindung betrifft eine Schweißschelle und speziell die Bereitstellung von Befestigungsmitteln für die Schweißschelle. Solche Schweißschellen werden über Kunststoffrohre oder Kunststoffrohr-Verbindungen gesetzt. Sie weisen an ihrer Innenseite Schweißvorrichtungen, beispielsweise Schweißdrähte auf, welche bei der Versorgung mit elektrischem Strom für eine dichte Schweißverbindung der Schelle mit dem Rohrstück, auf dem die Schelle sitzt, sorgt. Eine solche Verschweißung kann einfach der Verbindung zweier Rohre dienen, es ist aber auch möglich, durch das Aufsetzen einer Schweißstelle, die einen zusätzlichen Rohrabgang aufweist, ein durchgehendes Kunststoffrohr in einfacher Weise mit einer dicht eingebrachten Verzweigung zu versorgen.

Bisher wurden Befestigungsmittel, beispielsweise Befestigungsschrauben zu der Verpackung der Schweißschelle lose beigelegt, sie mussten vor der Montage in der Hand gehalten oder in sonstiger Weise bereitgehalten werden. Die Befestigung solcher Schweißschelle an Rohren ist oftmals mit einigem handwerklichen Aufwand verbunden, insbesondere müssen die aus einzelnen Schalen bestehenden Schweißschellen in ihrer Position am Rohr gehalten werden. Dazu muss ein Arbeiter oft schon beide Hände benützen, und wenn er gleichzeitig noch die Befestigungsmittel in der Hand halten oder aus einer Tasche hervorholen muss, kompliziert das den Anbringungsvorgang sehr.

Die EP 0 733 846 A2 betrifft eine Vorrichtung zum Anbohren von Kunststoffrohren von Versorgungsleitungen. Die Erfindung betrifft eine Vorrichtung zum Anbohren von Kunststoffrohren von Versorgungsleitungen, bestehend aus einem mit einem radial angeordneten Stutzen versehenen Sattel in Form einer Rohhalbschale, die mit einer mattenförmigen Heizdrahtanordnung an ihrer inneren Oberfläche versehen ist, und aus einem Widerlager in Form einer zweiten Halbschale, die mit dem Sattel mechanisch zusammenzuklemmen ist. Es ist die Aufgabe der Erfindung, mit einfachen Mitteln und in einfacher Weise einen sicheren Sitz des Sattels auf der Versorgungsleitung und damit eine absolute Dichtheit am Ort des Sattels zu erreichen. Die Erfindung besteht darin, dass sich beidseitig an dem halbrunden Teil des Sattels achsparallel in Tangentialebenen eben verlaufende Schenkel einstückig anschließen, dass sich die Innenwandung des Sattels über die Mittelebene des Kunststoffrohres hinaus erstreckt und in diesem Bereich (genähert) tangential weiterverläuft, dass die Seitenwandungen des Widerlagers parallel zu diesem Bereich oder unter einem spitzen Winkel geringer Gradzahl verlaufen, dass die Innenwandung des Sattels in ihrem sich über die Mittelebene des Kunststoffrohres hinaus erstreckenden und parallel zu den Seitenwandungen des Widerlagers verlaufenden Teil ebenfalls mit mattenförmiger Heizdrahtanordnung versehen ist.

Es ist deshalb ganz allgemein eine Aufgabe der vorliegenden Erfindung, den Montagevorgang für eine Schweißschelle zu vereinfachen, insbesondere die einfache Verfügbarkeit der Befestigungsmittel herzustellen.

Diese Aufgabe wird erfindungsgemäß durch eine Schweißschelle gemäß dem Anspruch 1 gelöst. Die Unteransprüche beschreiben bevorzugte Ausführungsformen der vorliegenden Erfindung.

Eine erfindungsgemäße Schweißschelle für Fluidleitungsrohre (also Rohre für gasförmige oder flüssige Medien), die mehrere Schellenschalen aufweist, die aneinander befestigt werden bzw. zur Befestigung aneinander vorgesehen sind, zeichnet sich dadurch aus, dass die Schweißschelle eine Transporthalterung für die Befestigungsmittel aufweist. Wenn die Befestigungsmittel mit Hilfe der Transporthalterung an der Schweißschelle vorgesehen sind, ist einerseits gewährleistet, dass sie beim Montagevorgang immer an dem Ort zur Verfügung stehen, wo sie gebraucht werden, andererseits gewährt dies dem Arbeiter die freie Verwendung seiner Hände beim Ansetzen der Schelle bzw. der Schellenschalen. Ein Verlust der Befestigungsmittel ist nicht mehr möglich, und der einfache Zugriff auf die Befestigungsmittel in der Transporthalterung an der Schweißschelle ermöglicht ein schnelleres und unkomplizierteres Arbeiten. Natürlich ist es dabei von Vorteil, wenn die Transporthalterung so ausgestaltet ist, dass die Befestigungsmittel leicht entnommen werden können.

In obigem Sinne besteht eine vorteilhafte Ausführungsform der Erfindung darin, für den Fall, wo die Befestigungsmittel Schrauben sind, eine Transporthalterung vorzusehen, die Ausnehmungen zum Einstecken bzw. Einschrauben eines Schraubenendes, insbesondere des Gewindeendes der Schrauben aufweist. Die Schrauben stecken dann zugriffsbereit in der Transporthalterung und können problemlos entnommen werden.

Dabei besteht die Möglichkeit, die Ausnehmungen mit Fixierungsmitteln für das Ende bzw. das Gewindeende zu versehen, insbesondere mit nach innen vorstehenden Stegen oder Innengewindeabschnitten. Solche Fixierungsmittel dienen dazu, eine ausreichende Sicherung gegen ein Verlieren der Befestigungsmittel bzw. Schrauben zu gewährleisten, und sie sind andererseits so ausgelegt, dass der Arbeiter die Befestigungsmittel leicht von Hand entnehmen kann, um sie dann zur Montage zu verwenden.

Bei einer weiteren Ausführungsform der vorliegenden Erfindung weisen die Schellenschalen Flanschstege auf, in denen Befestigungsbohrungen für die Befestigungsmittel vorgesehen sind, wobei die Transporthalterung, insbesondere die Einsteck- oder Einschraubaufnahmen neben den Befestigungsbohrungen in den Flanschstegen angeordnet ist bzw. sind. Durch die so herbeigeführte räumliche Nähe zwischen der Transporthalterung und dem Befestigungsbohrungen ist ein schnelles und sicheres Überführen der Befestigungsmittel ermöglicht.

Eine erfindungsgemäße Schweißschelle kann alle hierin beschriebenen Merkmale einzeln oder in Kombination aufweisen.

Die Erfindung wird im Weiteren anhand der beiliegenden Zeichnungen näher erläutert. Es zeigen:
- Figur 1: eine Stirnansicht einer Schweißschelle;
- Figur 2: eine seitliche Ansicht mit einem Schnitt durch den Flanschsteg einer oberen Schellenschale der Schweißschelle mit einer Teilvergrößerung; und
- Figur 3: eine Teilansicht von oben auf den Flanschsteg mit einer Ausschnittsvergrößerung.

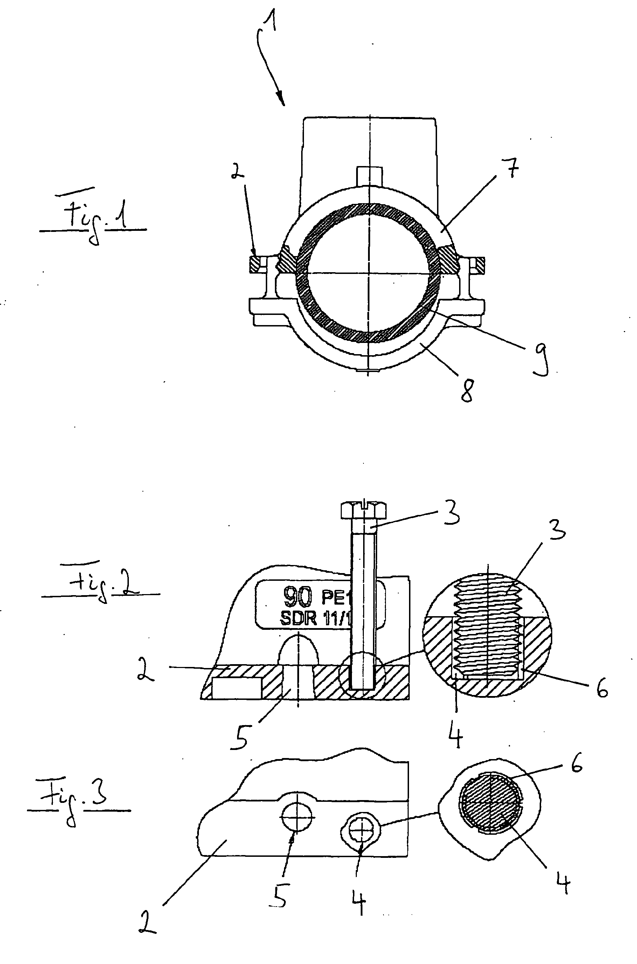

Die Figur 1 zeigt eine Schweißschelle 1, die eine obere Schellenschale 7 und eine untere Schellenschale 8 umfasst. Die beiden Schellenschalen 7, 8 umgeben das Rohr 9, an dem die Verschweißung stattfinden soll.

In Figur 1 ist der Flanschsteg 2 der oberen Schellenschale 7 zu sehen, auf den bei der Erläuterung der beiden weiteren Figuren näher eingegangen wird.

Die Figuren 2 und 3 zeigen den Flanschsteg 2 in einer Längsschnittansicht und in einer Ansicht von oben, jeweils mit Ausschnittsvergrößerungen für eine Transporthalterung 4. Im Flanschsteg befindet sich eine Durchgangsbohrung 5, durch die bei der Endbefestigung der Schweißschelle 1 am Rohr eine Befestigungsschraube 3 hindurch gesteckt wird. Die Durchgangsbohrung 5 ist ein Teil der gesamten Befestigung. Im gegenüberliegenden Flanschsteg der unteren Schellenschale 8 befindet sich eine Innengewinde-Bohrung (hier nicht dargestellt) über die dann die Befestigung der Schellenschalen am Rohr erfolgt.

Rechts neben der Durchgangsbohrung 5 weist der Flanschsteg 2 eine von oben eingeführte Sacklochbohrung 4 auf, die als Transporthalterung für eine Befestigungsschraube 3 dient. In der Sacklochbohrung 4 sind, wie in den Vergrößerungen der Figuren 2 und 3 zu sehen ist, drei Haltestege 6 angeordnet, die dabei helfen, das untere Ende der Schraube 3 nach dem Einsetzen in das Sackloch 4 soweit zu fixieren, dass ein versehentliches Herausfallen verhindert wird.

Durch diese Konstruktion hat ein Arbeiter, nachdem er die Schellenschalen 7, 8 am Rohr angesetzt hat, unmittelbar Zugriff auf die Schraube 3, die er leicht von Hand aus dem Sackloch 4 herausdrehen kann. Er kann damit die Befestigung der Schellenschalen 7, 8 über die Durchgangsbohrung 5 und das (nicht dargestellte) Innengewinde in der unteren Schellenschale leicht durchführen. Die Befestigungsschrauben stehen immer unmittelbar am Verwendungsort zur Verfügung, sie müssen nicht in der Hand oder in sonstiger Weise bereit gehalten werden.

## Patentansprüche

1. Schweißschelle für Fluidleitungsrohre für gasförmige oder flüssige Medien, wobei die Schweißschelle (1) mehrere Schellenschalen (7, 8) aufweist, die mit Befestigungsschrauben (3) und Befestigungsbohrungen (5) aneinander befestigt werden, **dadurch gekennzeichnet, dass** die Schweißschelle (1) eine Transporthalterung (4) für die Befestigungsschrauben (3) aufweist, die zusätzlich zu den Befestigungsbohrungen (5) für die Befestigung der Schellenschalen (7, 8) am Rohr vorgesehen ist.

2. Schweißschelle nach Anspruch 1, **dadurch gekennzeichnet, dass** die Transporthalterung Ausnehmungen (4) zum Einstecken bzw. Einschrauben des Gewindeendes der Befestigungsschrauben (3) aufweist.

3. Schweißschelle nach Anspruch 2, **dadurch gekennzeichnet, dass** die Ausnehmungen Fixierungsmittel (6) für das Gewindeende aufweisen, insbesondere nach innen vorstehende Stege (6) oder Innengewindeabschnitte.

4. Schweißschelle nach einem der Ansprüche 1 bis 3, **dadurch gekennzeichnet, dass** die Schellenschalen (7, 8) Flanschstege (2) aufweisen, in denen Befestigungsbohrungen (5) für die Befestigungsschrauben (3) vorgesehen sind, wobei die Transporthalterung, insbesondere die Einsteck- oder Einschraubaufnahmen (4), neben den Befestigungsbohrungen (5) in den Flanschstegen (2) angeordnet ist bzw. sind.

## Claims

1. A welded bracket for fluid conduit pipes for gaseous or liquid media, wherein the welded bracket (1) comprises a plurality of bracket shells (7, 8) which are fastened to each other by fastening screws (3) and fastening bores (5), **characterised in that** the welded bracket (1) comprises a transport mount (4) for the fastening screws (3) which is provided in addition to the fastening bores (5) for fastening the bracket shells (7, 8) to the pipe.

2. The welded bracket according to claim 1, **characterised in that** the transport mount comprises cavities (4) for inserting and/or screwing in the threaded end of the fastening screws (3).

3. The welded bracket according to claim 2, **characterised in that** the cavities comprise fixing means (6) for the threaded end, in particular inwardly protruding stays (6) or interior thread portions.

4. The welded bracket according to any one of claims 1 to 3, **characterised in that** the bracket shells (7, 8) comprise flange stays (2) in which fastening bores (5) for the fastening screws (3) are provided, wherein the transport mount, in particular the insertion or screwing-in receptacles (4), is/are arranged next to the fastening bores (5) in the flange stays (2).

## Revendications

1. Collier soudable pour tuyaux de fluide pour des milieux gazeux ou liquides, dans lequel le collier de soudage (1) comporte plusieurs coques de collier (7, 8) fixées l'une sur l'autre par des vis de fixation (3) et des trous de fixation (5), **caractérisé en ce que** le collier soudable (1) comporte un support de transport (4) pour les vis de fixation (3), ledit support de transport étant prévu en plus des trous de fixation (5) pour fixer les coques de collier (7, 8) sur le tuyau.

2. Collier soudable selon la revendication 1, **caractérisé en ce que** le support de transport comporte des évidements (4) pour enfoncer ou visser l'extrémité filetée des vis de fixation (3).

3. Collier soudable selon la revendication 2, **caractérisé en ce que** les évidements comportent des moyens de fixation (6) pour l'extrémité filetée, en particulier des talons (6) ou des parties filetées intérieures faisant saillie vers l'intérieur.

4. Collier soudable selon l'une quelconque des revendications 1 à 3, **caractérisé en ce que** les coques de collier (7, 8) comportent des talons de bride (2) dans lesquels sont prévus des trous de fixation (5) pour les vis de fixation (3), dans lequel le support de transport, en particulier les évidements d'enfoncement ou de vissage (4), est ou sont agencés à côté des trous de fixation (5) dans les filets de bride (2).
